Europäisches Patentamt

European Patent Office

Office européen des brevets

(11) Numéro de publication: **0 360 670 B1**

## FASCICULE DE BREVET EUROPEEN

(45) Date de publication de fascicule du brevet: **08.06.94**    (51) Int. Cl.⁵: **H04N 7/133**

(21) Numéro de dépôt: **89402535.2**

(22) Date de dépôt: **15.09.89**

(54) **Procédé de quantification à seuil variable dans un codage par transformation pour la transmission de signaux d'image.**

(30) Priorité: **19.09.88 FR 8812186**

(43) Date de publication de la demande:
**28.03.90 Bulletin 90/13**

(45) Mention de la délivrance du brevet:
**08.06.94 Bulletin 94/23**

(84) Etats contractants désignés:
**DE GB IT NL SE**

(56) Documents cités:
EP-A- 0 053 064    EP-A- 0 239 076
EP-A- 0 267 578    EP-A- 0 267 579
DE-A- 3 124 550    FR-A- 2 597 282

FREOUENZ, vol. 38, no. 10, octobre 1984,
pages 247-254, Berlin, DE; The-Anh VUONG:
Entwurf eines blockweise adaptiven DPCM-
Coders für die M-Spekralwerte von Bilddaten"

ONZIEME COLLOOUE GRETSI, Nice, 1er au 5
juin 1987, thème 12: "Images", pages
777-779; R. PHILIPPE: "Présentation d'un codec visiophone à 64Kbit/s"

(73) Titulaire: **FRANCE TELECOM**
**6, Place d'Alleray**
**F-75015 Paris(FR)**

(72) Inventeur: **Guichard, Jacques**
**8-10, rue des Morillons**
**F-75015 Paris(FR)**
Inventeur: **Eude, Gérard**
**26, Allée Jean Bart**
**F-77200 Torcy(FR)**

(74) Mandataire: **Mongrédien, André et al**
**c/o BREVATOME**
**25, rue de Ponthieu**
**F-75008 Paris (FR)**

## Description

La présente invention a pour objet un procédé de quantification dans un codage par transformation notamment orthogonale, pour la transmission de signaux d'image. Ce procédé constitue l'une des étapes d'un traitement en temps réel d'un signal d'information de type séquentiel, tel qu'un signal vidéo, dans le but de comprimer le volume des données nécessaires pour représenter ce signal afin de le transmettre avec un débit binaire minimum pouvant notamment être adapté à un canal de transmission à 64 Kbits/s

Le procédé de l'invention s'applique en particulier à la quantification des images de télévision, de visioconférence ou de visiophonie. Il peut être également utilisé pour les images à variations lentes, tel qu'en télésurveillance.

On connaît de nombreux systèmes de codage d'image pour comprimer un signal d'image afin de pouvoir transmettre cette image sur une ligne de transmission avec un débit binaire réduit. On pourra par exemple se reporter aux documents EP-A-0084270, EP-A-0123456 et US-A-4196148 dans lesquels sont décrits différents systèmes de codage d'image.

Dans chaque système de codage, le signal d'image reçu est un signal bidimensionnel numérique. Le codage de ce signal se fait en quatre étapes :

- une étape de transformation qui, à partir du signal bidimensionnel décrivant une image dans le domaine spatial, produit un signal bidimensionnel décrivant l'image dans un domaine transformé (appelé domaine fréquentiel par abus de langage ;
- une étape de quantification du signal bidimensionnel transformé pour réduire le nombre de niveaux des coefficients transformés du signal bidimensionnel transformé ;
- une étape de balayage de l'image transformée pour produire une suite monodimensionnelle de coefficients transformés ;
- et, éventuellement, une étape de codage pour coder la suite des coefficients transformés, le codage utilisant un code statistique, par exemple du type code de HUFFMAN.

En pratique, les quatre étapes de codage qui viennent d'être énoncées ne s'appliquent pas directement à l'image globale, car l'étape de transformation serait très complexe et demanderait un temps de calcul exorbitant. Au lieu de traiter l'image en une seule fois, il est donc courant de décomposer cette image en plusieurs blocs à chacun desquels sont appliquées successivement les quatre étapes énoncées ci-dessus.

Après transformation, ces blocs sont codés soit en mode intra-image, soit en mode inter-image.

Dans le premier cas, le bloc non transformé représente une partie d'une image alors que dans le second cas le bloc non transformé représente une différence entre deux parties d'images, qui sont en général respectivement une partie d'image d'une trame d'image et la même partie d'image de la trame d'image précédente. Seule cette partie d'image est codée et transmise.

Dans le cas de codage en mode inter-image, on peut avoir éventuellement une prédiction issue de la mémoire d'image précédente, codée et reconstruite et qui subit un filtrage.

Chaque bloc a une taille NxN de l'ordre de 8x8 pixels, cette taille constituant en général un bon compromis entre la complexité de l'étape de transformation, qui augmente avec la taille des blocs, et le débit sur la ligne de transmission. De manière générale, un bloc peut être rectangulaire (taille de NxM pixels) et une image peut être décomposée en blocs n'ayant pas tous la même taille.

L'opération de transformation appliquée à chaque bloc peut être une transformée en cosinus discrète, une transformée de Fourier, une transformée de Hadamard, une transformée de Haar, une transformée hautement corrélée ou autre. Les coefficients du bloc transformé sont appelés coefficients fréquentiels en général, ou coefficients séquentiels pour la transformée de Hadamard, les coefficients du bloc transformé ne représentent pas exactement les composantes fréquentielles de l'image correspondant au bloc non transformé. Cependant, par abus de langage, on appelle domaine fréquentiel le domaine du bloc transformé.

Dans un bloc transformé de taille NxM, où les coefficients ont des indices de ligne compris entre 0 et N-1 et des indices de colonne compris entre 0 et M-1, le coefficient de coordonnées (0,0) représente la composante continue et les autres coefficients les composantes alternatives, les composantes de basse fréquence correspondant aux coefficients de faibles indices et les composantes de haute fréquence aux coefficients d'indice élevés.

On sait que la composante continue a en général une valeur élevée et on constate que, en moyenne, la valeur des composantes alternatives décroit lorsque l'on va des basses fréquences vers les hautes fréquences.

La quantification des valeurs des coefficients transformés réalise une première compression du bloc. Pour cette quantification, on définit des niveaux de quantification (appelés aussi niveaux de décision) répartis, régulièrement ou non, dans la gamme [-B,B] , où B est l'amplitude maximale possible pour un coefficient transformé.

La quantification consiste donc à définir une échelle de mesure constituée de plusieurs niveaux espacés du pas de quantification G, le premier étant appelé seuil de quantification. Chaque coefficient est comparé à ce seuil de quantification.

De façon plus précise, on compare chaque coefficient balayé à l'intervalle défini par ]+G,-G[. Les coefficients se trouvant dans l'intervalle sont codés par un zéro.

Les coefficients se trouvant à l'extérieur de l'intervalle sont comparés à des multiples de +G et -G, ces multiples définissent les différents niveaux, les coefficients sont ensuite codés en fonction de ces niveaux. A titre d'exemple, lorsqu'un coefficient est compris entre 3G et 4G son codage correspondra à une amplitude 4.

Comme certains blocs contiennent plus ou moins d'informations liées aux mouvements, on régule la quantité d'informations à transmettre d'un bloc d'une image par rapport à un bloc de l'image suivante. On supprime pour cela les coefficients basse-fréquence dans les blocs correspondant à beaucoup de mouvements dans l'image. On peut également dans le même but modifier le pas de quantification G d'un bloc d'une image à un bloc de l'image suivante et choisir par exemple un pas G faible pour des blocs sans mouvement et un pas G élevé pour des blocs avec mouvements importants.

L'ensemble de tous ces traitements connus que l'on trouve décrit dans les demandes de brevet citées précédemment et que l'on peut trouver également décrits dans l'article intitulé "L'image numérique et le codage" du 4ème trimestre 1986 dans le n°126 de l'écho des Recherches, ont pour objectif une compression importante du signal d'image tout en maintenant une qualité d'image convenable.

Toujours dans le but de comprimer la quantité d'informations à transmettre afin d'en réduire le débit et de procéder à une transmission à bas débit telle que réalisée dans le réseau téléphonique numérique à 64 K bits/s, la demanderesse ne s'est pas limitée à l'observation de la présence ou non de mouvement d'une image à la suivante et donc d'un bloc au suivant comme cela a été fait jusque là dons l'état de la technique.

La demanderesse a, de façon inattendue, eu l'idée d'agir sur le pas de quantification G à l'intérieur même de chaque bloc de coefficient afin de modifier le seuil de quantification entre les différents coefficients d'un même bloc. La demanderesse a observé à la suite d'essais et d'une mise en pratique concrète que la variation du pas de quantification à l'intérieur même d'un bloc permettait de comprimer encore plus l'information à transmettre sans altérer aucunement la qualité de l'image transmise.

Une demande de brevet français FR-A-2 597 282 concerne un procédé de quantification dans un codage par transformation pour la transmission d'un signal image, la quantification consistant à tenir compte de certains niveaux de quantification dans une liste prédéterminée de niveaux de quantification et à choisir la valeur de chaque niveau de quantification en fonction d'un paramètre adaptatif qui est lui-même fonction de l'amplitude et du coefficient transformé de plus grande amplitude, appartenant à un sous-ensemble dudit bloc transformé. Cette demande n'enseigne donc pas l'utilisation d'un seuil de quantification variable d'un coefficient à un autre en fonction de la valeur de ce coefficient.

Par contre, la présente invention a pour objet un procédé de quantification à seuil dans un codage par transformation pour la transmission de signaux d'image consistant à faire varier le seuil de quantification à l'intérieur même de chaque bloc de coefficients balayé.

La présente invention a plus précisément pour objet un procédé de quantification dans un codage par transformation pour la transmission sur une liaison à bas débit, d'un signal d'image, ce signal d'image étant traité sous forme de blocs contenant chacun un ensemble de données numériques organisées en matrice et représentant une partie d'une image ou une différence de deux parties d'images, comprenant les étapes suivantes :

- une étape de transformation de chaque bloc par un opérateur de transformation pour produire un bloc transformé de coefficients transformés (Ci) organisés en matrice et représentant les composantes fréquentielles de ladite partie d'image ou de ladite différence de deux parties d'image ;
- une étape de quantification de chaque coefficient transformé d'un bloc transformé, à la suite d'un balayage du bloc, par comparaison à des niveaux de quantification espacés d'un pas de quantification, le premier étant appelé seuil de quantification ;

le procédé étant caractérisé en ce qu'il comprend :

- une étape de variation du seuil utilisé pour quantifier chaque coefficient d'un bloc ; ce seuil T étant susceptible de varier d'un coefficient transformé (Ci) au suivant (Ci+1) dans le balayage, selon que ce coefficient transformé remplit la condition suivante : $-T < C_i < T$.

Selon une autre caractéristique de l'invention, on choisit pour un bloc d'une image donnée un premier seuil égal au pas de quantification (T = G),

- on définit deux premiers seuils de quantification par l'intervalle ]-G, +G[,
- on procède au balayage de ce bloc,
- on effectue une comparaison sur chaque coefficient Ci pour savoir si ce coefficient remplit la condition (III) suivante :

$$-T < C_i < T$$

- on conserve le même seuil $T = G$ pour le coefficient suivant $Ci + 1$ dans le cas où le coefficient $Ci$ ne remplit pas cette condition, un code $Ki$ étant transmis sur la liaison de transmission à la place de $Ci$,
- on incrémente le seuil $T$ $(T = T + a)$ pour le coefficient suivant $Ci + 1$ dans le cas où le coefficient $Ci$ remplit la condition (III), un code $Ki = 0$ étant transmis sur la liaison de transmission à la place de $Ci$.

Selon une autre caractéristique de l'invention, on procède lors des incrémentations successives du seuil $T$, à une comparaison par rapport à un seuil maximum $Tmax$ prédéterminé.

Selon une caractéristique de l'invention, $Tmax = G + ki$, où $i$ est l'indice fréquentiel du balayage du bloc.

Avantageusement on a choisi un pas maximum $Tmax$ égal à $G + G/2$ pour une application de visiophonie à 64 Kbits/s.

Avantageusement, on choisit un code $Ki$ pour coder un coefficient $Ci$ tel que $Ci$ soit supérieur ou égal à $(Ki-1).G$ et inférieur ou égal à $Ki.G$.

Selon une autre caractéristique de l'invention, on procède à un double balayage consistant à balayer les coefficients selon deux sens opposés l'un partant du premier coefficient $Co$ correspondant à la composante continue du bloc vers le dernier coefficient $Cp$ correspondant à la composante haute fréquence de ce bloc, l'autre partant du dernier coefficient $Cp$ vers le premier $Co$.

Le balayage effectué peut être soit horizontal (de ligne à ligne), soit vertical (de colonne à colonne) soit diagonal ou tout autre.

Selon un autre aspect de l'invention, le premier seuil qui est égal au pas de quantification choisi $(T = G)$ pour un bloc d'une image donnée peut être modifié d'une image à l'autre d'un groupe de bloc à l'autre, ou d'un bloc à l'autre.

Dans la suite de la description pour des raisons de simplification, les coefficients transformés d'un bloc ayant subi une transformation orthogonale sont repérés par un seul indice $i$ et non selon un repérage matriciel classique correspondant à leur position dans le bloc.

En effet, pour simplifier, l'on a repéré chaque coefficient par l'indice $i$ correspondant à l'ordre dans lequel chaque coefficient est balayé, ces coefficients étant ensuite transmis en série dans cet ordre.

L'ensemble des caractéristiques et avantages de l'invention ressortiront mieux de la description qui va suivre, donnée à titre illustratif mais non limitatif, en référence aux dessins annexés, sur lesquels :

- la figure 1 représente les différentes étapes du procédé sous la forme d'un ordinogramme, conformément à l'invention,

- la figure 2 représente un diagramme représentant les amplitudes d'une série de coefficients transformés avec les variations du pas de quantification correspondant.

Le procédé conforme à l'invention s'applique sur des blocs d'images balayés par tout type de balayage qu'il soit horizontal, vertical, ou diagonal ou autre par exemple Peano, tels que décrits dans l'article précédemment cité et paru dans l'écho des Recherches de 1986.

Un bloc comporte une matrice de coefficients transformés par une transformation orthogonale. Ces coefficients sont désignés par une série $\{Ci, i = 1$ à $p\}$ correspondant à l'ordre dans lequel il sont balayés.

Selon le procédé, on fait varier le seuil utilisé pour quantifier chaque coefficient d'un bloc.

1) On se fixe, pour un bloc donné, un premier seuil $T$ égal au pas de quantification de valeur $G$ prédéterminée classiquement en fonction de l'importance des mouvements de la partie d'image que représente ce bloc ou par tout autre procédé issu de la technique de régulation.

2) On définit la taille du bloc et donc le coefficient $i$ maximum, $imax = p$ soit couramment 64.

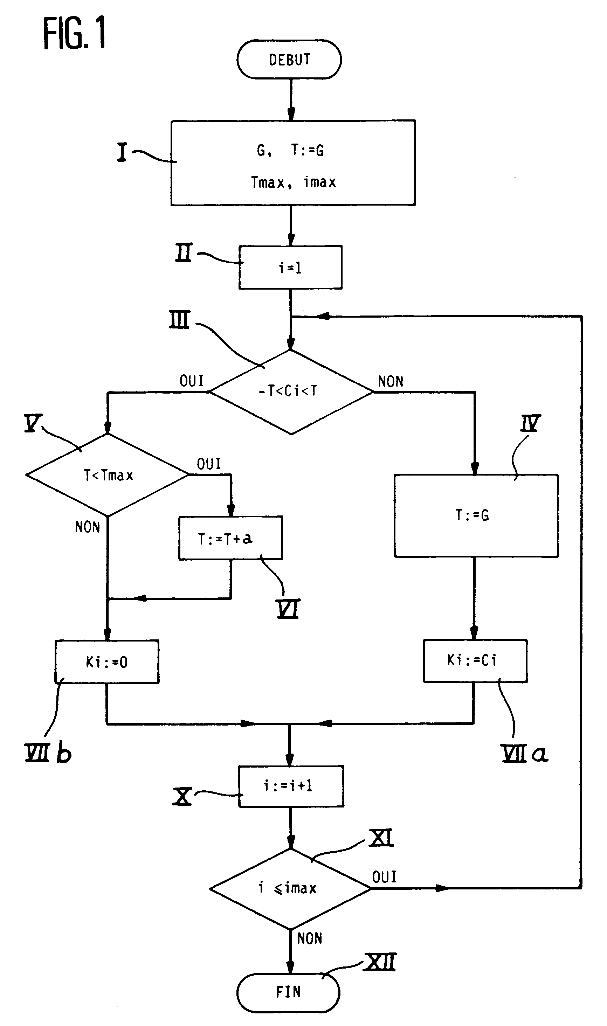

3) On se fixe également de préférence un seuil maximum $Tmax$, que l'on a choisi de la forme $G + ki$ et que l'on a pris tout à fait à titre d'exemple égal à $G + G/2$. Ces trois premières étapes correspondent au bloc portant la référence I sur la figure 1.

4) On procède au balayage du bloc, traduit sur l'ordinogramme par une incrémentation successive (bloc X) de l'indice $i$ des coefficients avec $i = 1$ pour le premier coefficient (bloc II fig.1) et une comparaison de cet indice $i$ avec $imax$ (bloc XI) qui traduit la fin du traitement du bloc lorsque cette valeur est atteinte (bloc XII).

5) On effectue une comparaison sur chaque coefficient $Ci$ pour savoir si ce coefficient remplit la condition III suivante :

$$-T < Ci < +T \qquad \text{(bloc III fig.1)}$$

6) Dans le cas où cette condition n'est pas remplie, on garde le même seuil $T$ égal au pas de quantification $G$ (c'est-à-dire $T = G$, bloc IV) pour le traitement du coefficient suivant $Ci + 1$ et on code le coefficient $Ci$ en cours, ce codage consistant à remplacer l'amplitude du coefficient par une amplitude comprimée $Ki$ (bloc VIIa).

7) Dans le cas où la condition III est remplie, on procède à une incrémentation du seuil $T$, consistant donc à prendre comme nouveau seuil pour le traitement du coefficient $Ci + 1$ un seuil $T + a$ (bloc VI). On code le coefficient en cours remplissant cette condition par un code $Ki = 0$,

l'amplitude de ce coefficient est donc remplacée par une amplitude nulle (bloc VIIb).

8) Dans la mesure où l'on se fixe un seuil maximal Tmax, on procède à une comparaison du seuil en cours T à ce seuil maximum Tmax (bloc VI).

Si T remplit la condition T<Tmax on procède à l'incrémentation (bloc VI). Si T ne remplit pas cette condition, on conserve un seuil égal au pas de quantification T = G pour le coefficient suivant Ci + 1.

L'incrément $\underline{a}$ est un nombre positif que l'on prend à titre d'exemple égal à 1.

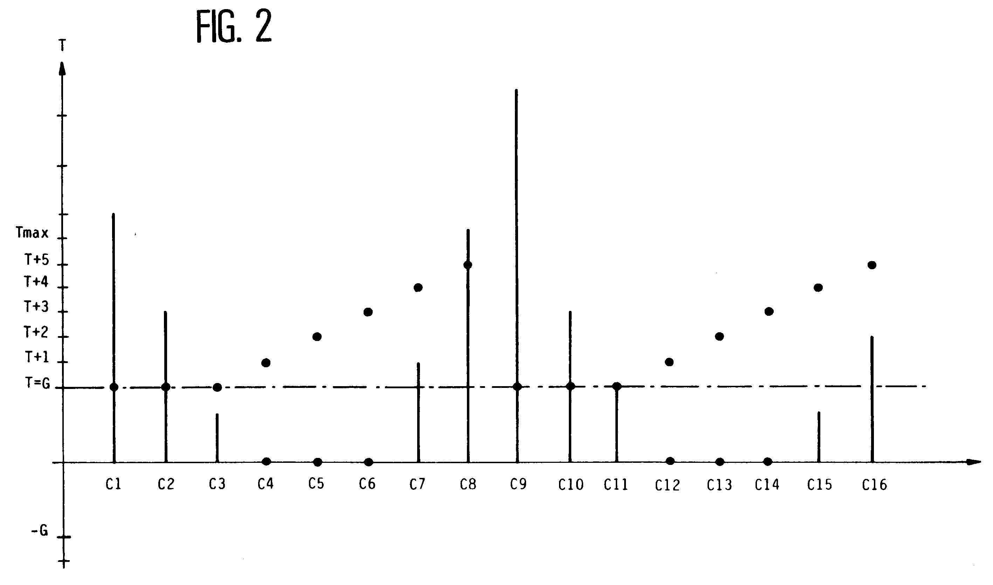

On a représenté sur la figure 2 à titre d'exemple un diagramme représentant l'amplitude de 16 coefficients C1-C16 d'un bloc avec pour chacun d'eux l'évolution du seuil T conformément à l'invention.

On constate que le seuil T est incrémenté de 1 à partir du coefficient C4, car le coefficient C3 remplit la relation III puisque son amplitude est comprise dans l'intervalle ]-G, + G[.

Le seuil T est incrémenté jusqu'au coefficient C8. Ce seuil repasse à T = G pour le coefficient C9 car le coefficient C8 ne remplit plus la condition III. Le seuil T reste à T = G jusqu'à ce qu'un nouveau coefficient remplisse la condition III.

Avantageusement, on choisit un code Ki pour coder un coefficient Ci tel que l'on ait la relation suivante :

(Ki-1)G≤Ci≤Ki.G

Selon une autre caractéristique du procédé conforme à l'invention, on effectue un double balayage du bloc traité, selon deux sens opposés afin de symétriser le traitement. On ne transmet à la suite de ce double balayage que des codes Ki non nuls pour les coefficients qui ne remplissent pas la condition III au cours des deux balayages et des codes Ki nuls pour les coefficients qui remplissent la condition III au cours des deux balayages ou qui remplissent la condition III au cours de l'un des deux balayages. On réalise à ce moment là une fonction logique OU entre les résultats des deux balayages.

Lors du premier balayage, on part du coefficient Co pour arriver au coefficient Cp ; lors du deuxième balayage on part du coefficient Cp pour arriver au coefficient Co.

Il est possible, tout comme dans l'état de la technique, sans modifier le procédé conforme à l'invention, de modifier le pas de quantification G d'une image à l'autre, d'un bloc à l'autre, d'un groupe de bloc à l'autre.

Les valeurs de G et de Tmax ne sont pas forcément des constantes mais peuvent être des fonctions de l'indice fréquentiel du balayage et aussi du taux de remplissage de la mémoire tampon contenant le bloc stocké dans le cas de Tmax.

L'invention s'applique également à tout procédé dans lequel, après transformation ou non, un ensemble de points ou blocs est seuillé après balayage par exemple Peano avant la transmission.

Le procédé conforme à l'invention peut être mis en oeuvre au moyen d'une logique cablée classique en soi placée à la sortie de l'opérateur effectuant la transformation orthogonale et comportant par exemple des comparateurs à seuils, un compteur d'incrémentation et des portes logiques et apte à réaliser les étapes de comparaison et d'incrémentation du pas T de l'ordinogramme. Le code peut être réalisé par un circuit de quantification classique placé à la sortie de la logique câblée.

Le procédé peut être mis en oeuvre par tout type de processeur spécialisé programmé à cet effet, tel qu'un transputeur programmé en langage OCCAM, ou qu'un circuit TMS320-25 programmé en assembleur.

Un exemple de programme en langage structuré est donné ci-dessous à titre d'exemple et peut parfaitement être utilisé par un homme de l'art pour mettre en oeuvre le procédé dans les circuits spécialisés qui viennent d'être cités :

```
i = 1
T: = G
Tmax : = G +G/2
TANT QUE i ≤ imax FAIRE
        SI—T<Ci<+T ALORS
            SI T<Tmax ALORS
                T : = T+1
            FIN SI
            Ki : = 0
        SINON
            T : = G
            Ki : = Ci
        FINSI
        I : = I+1
FINTANTQUE.
```

**Revendications**

1. Procédé de quantification dans un codage par transformation pour la transmission sur une liaison à bas débit, d'un signal d'image, ce signal d'image étant traité sous forme de blocs contenant chacun un ensemble de données numériques organisées en matrice et représentant une partie d'une image ou une différence de deux parties d'image, comprenant les étapes suivantes :

- une étape de transformation de chaque bloc par un opérateur de transformation pour produire un bloc transformé de coefficients transformés (Ci) organisés en matrice et représentant les composantes fréquentielles de ladite partie d'image ou de ladite différence de deux parties d'image ;
- une étape de quantification de chaque coefficient transformé d'un bloc transformé, à la suite d'un balayage du bloc, par comparaison à des niveaux de quantification espacés d'un pas de quantification G, le premier étant appelé seuil de quantification, le procédé étant caractérisé en ce qu'il comprend :
- une étape de variation du seuil utilisé pour quantifier chaque coefficient d'un bloc ; ce seuil T étant susceptible de varier d'un coefficient transformé (Ci) au suivant (Ci + 1) dans le balayage, selon que ce coefficient transformé (Ci) remplit la condition suivante : -T<Ci<T.

2. Procédé de quantification selon la revendication 1, caractérisé en ce que :
- on choisit pour un bloc d'une image donnée, un premier seuil égal au pas de quantification, T = G,
- on définit deux premiers seuils de quantification par l'intervalle ]-G, + G[;
- on procède au balayage de ce bloc ;
- on effectue une comparaison sur chaque coefficient Ci pour savoir si ce coefficient remplit la condition III suivante :

  -T < Ci < T

- on conserve le même seuil (T = G) pour le coefficient suivant Ci + 1 dans le cas ou le coefficient Ci ne remplit pas cette condition, un code Ki étant transmis sur la liaison de transmission à la place de Ci,
- on incrémente le seuil T (T = T + a) pour le coefficient suivant Ci + 1 dans le cas où le coefficient Ci remplit la condition (III), un code Ki = 0 étant transmis sur la liaison à la place de Ci.

3. Procédé de quantification selon la revendication 1 ou 2, caractérisé en ce qu'on procède lors des incrémentations successives du seuil T, à une comparaison par rapport à un seuil maximum Tmax prédéterminé.

4. Procédé de quantification selon l'une quelconque des revendications 1 à 3, caractérisé en ce qu'on choisit un seuil maximum Tmax de la forme G + ki.

5. Procédé de quantification selon l'une quelconque des revendications 1 à 4, caractérisé en ce qu'on choisit un code Ki non nul pour coder un coefficient Ci tel que :

   G.(Ki-1) ≤ Ci ≤ G.Ki

6. Procédé de quantification selon l'une quelconque des revendications 1 à 5, caractérisé en ce qu'on procède à un double balayage consistant à balayer les coefficients selon deux sens opposés l'un partant d'un premier coefficient Co vers un dernier Cp, et l'autre partant du dernier vers le premier.

7. Procédé de quantification selon l'une quelconque des revendications 1 à 6, caractérisé en ce que le balayage effectué est diagonal.

8. Procédé de quantification selon l'une quelconque des revendications 1 à 6, caractérisé en ce que le balayage effectué est horizontal.

9. Procédé de quantification selon l'une quelconque des revendications 1 à 6, caractérisé en ce que le balayage effectué est vertical.

10. Procédé de quantification selon l'une quelconque des revendications 1 à 6, caractérisé en ce que les blocs sont seuillés et codés après un balayage de Peano.

11. Procédé de quantification selon l'une quelconque des revendications 1 à 10, caractérisé en ce que le pas de quantification choisi pour un bloc est susceptible d'être modifié d'une image à l'autre,d'un groupe de blocs à l'autre, d'un bloc à l'autre.

**Claims**

1. Quantification process in an encoding by transformation for the transmission on a low rate link of an image signal, the latter being treated in the form of blocks, each containing a set of digital data organized in matrix form and representing part of an image or a difference between two image parts, comprising the following stages: each block being transformed by a transformation operator to produce a transformed block of transformed coefficients (Ci) organized in matrix form and representing the frequency components of said image part or said difference between two image parts, a quantification stage of each transformed coefficient of a transformed block, following a scan of the block by comparison with quantification levels spaced by a quantification step, the first being called the quantification threshold, the process being characterized in that it comprises a stage of varying the threshold used for quantifying each coefficient of a block, said threshold T being able to vary from one transformed coefficient (Ci) to the following one (Ci + 1) in the scan, as a function of whether the transformed coefficient fulfils the following condition: -T < Ci < T.

2. Quantification process according to claim 1, characterized in that for one block of a given image a first threshold is chosen equal to the quantification step (T = G), two first quantification thresholds are defined by the interval ]-G, + G[, the block is scanned, a comparison takes place on each coefficient Ci to establish whether said coefficient fulfils the following condition (III): -T < Ci < T, the same threshold T = G is retained for the following coefficient Ci + 1 in the case where the coefficient Ci does not fulfil this condition, a code Ki being transmitted on the transmission link in place of Ci, the threshold T (T = T + a) is incremented for the following coefficient Ci + 1 in the case where the coefficient Ci fulfils the condition (III), a code Ki = 0 being transmitted on the transmission link in place of Ci.

3. Quantification process according to claims 1 or 2, characterized in that, during successive incrementations of the threshold T, a comparison is made with a predetermined maximum threshold Tmax.

4. Quantification process according to any one of the claims 1 to 3, characterized in that a maximum threshold Tmax of form G + ki is chosen.

5. Quantification process according to any one of the claims 1 to 4, characterized in that a non-zero code Ki is chosen for encoding a coefficient Ci such that:

$$G.(Ki-1) \leqq Ci \leqq G.Ki$$

6. Quantification process according to any one of the claims 1 to 5, characterized in that a double scan is performed consisting of scanning the coefficients in two opposite directions, one passing from a first coefficient Co to a final coefficient Cp and the other from the final coefficient to the first coefficient.

7. Quantification process according to any one of the claims 1 to 6, characterized in that a diagonal scan is performed.

8. Quantification process according to any one of the claims 1 to 6, characterized in that a horizontal can is performed.

9. Quantification process according to any one of the claims 1 to 6, characterized in that a vertical scan is performed.

10. Quantification process according to any one of the claims 1 to 6, characterized in that the blocks are thresholded and encoded following a Peano scan.

11. Quantification process according to any one of the claims 1 to 10, characterized in that the quantification step chosen for a block can be modified between one image and the other, between one block group and the other and one block and the other.

**Patentansprüche**

1. Verfahren zur Quantisierung in einer Transformationscodierung eines Bildsignals für die Übertragung auf einer Verbindungsleitung niedriger Übertragungsgeschwindigkeit, wobei das Bildsignal in Form von Blöcken verarbeitet wird, die jeder eine Gesamtheit von matrixorganisierten numerischen Daten enthalten und einen Teil eines Bildes oder eine Differenz zweier Bildteile darstellen, bestehend aus folgenden Schritten:

- Transformation eines jeden Blocks durch einen Transformationsoperator zur Erzeugung eines transformierten Blocks von transformierten Koeffizienten (Ci), die matrixorganisiert sind und die Teilfrequenzen des genannten Bildteils bzw. der genannten Differenz zweier Bildteile darstellen;

- Quantisierung eines jeden transformierten Koeffizienten eines transformierten Blocks, im Anschluß an eine Blockabtastung, im Vergleich zu Quantisierungsniveaus, zwischen denen ein Quantisierungsschritt G liegt, wobei der erste als Quantisierungsschwellenwert bezeichnet wird, wobei das Verfahren dadurch gekennzeichnet ist, daß es folgenden Schritt beinhaltet:

- Variation des Schwellenwertes, der verwendet wird, um jeden Koeffizienten eines Blocks zu quantisieren; wobei dieser Schwellenwert T in der Abtastung von einem transformierten Koeffizienten (Ci) zum nächsten (Ci + 1) variieren kann, je nachdem, ob dieser transformierte Koeffizient (Ci) die folgende Bedingung erfüllt: -T<Ci<T.

2. Quantisierungsverfahren gemäß Anspruch 1, gekennzeichnet dadurch, daß

- für einen Block eines gegebenen Bildes ein erster Schwellenwert gleich dem Quantisierungsschritt, T = G, gewählt wird,
- zwei erste Quantisierungsschwellenwerte durch das Intervall ]-G, + G[ definiert werden;
- dieser Block abgetastet wird;
- ein Vergleich an jedem Koeffizienten Ci vorgenommen wird, um zu prüfen, ob dieser Koeffizient die folgende Bedingung III erfüllt:

$-T < Ci < T$

- der gleiche Schwellenwert (T = G) für den folgenden Koeffizienten Ci + 1 beibehalten wird, falls der Koeffizient Ci diese Bedingung nicht erfüllt, wobei statt Ci ein Code Ki auf der Übertragungsverbindung übertragen wird;
- der Schwellenwert T (T = T + a) für den folgenden Koeffizienten Ci + 1 erhöht wird, falls der Koeffizient Ci die Bedingung (III) erfüllt, wobei statt Ci ein Code Ki = 0 auf die Übertragungsverbindung übertragen wird;

3. Quantisierungsverfahren gemäß Anspruch 1 oder 2, gekennzeichnet dadurch, daß bei den aufeinanderfolgenden Erhöhungen des Schwellenwertes T ein Vergleich mit dem vorgegebenen Höchstschwellenwert Tmax angestellt wird.

4. Quantisierungsverfahren gemäß einem der Ansprüche 1 bis 3, gekennzeichnet dadurch, daß ein Höchstschwellenwert Tmax der Form G + Ki gewählt wird.

5. Quantisierungsverfahren gemäß einem der Ansprüche 1 bis 4, gekennzeichnet dadurch, daß ein Code Ki ungleich null gewählt wird, um einen Koeffizienten Ci zu codieren, so daß

$G.(Ki-1) \leq Ci \leq G.Ki$

6. Quantisierungsverfahren gemäß einem der Ansprüche 1 bis 5, gekennzeichnet dadurch, daß eine zweifache Abtastung vorgenommen wird, die daraus besteht, die Koeffizienten in zwei entgegengesetzten Richtungen abzutasten, einmal ausgehend von einem ersten Koeffizienten Co in Richtung auf einen letzten Koeffizienten Cp, und ein anderes Mal ausgehend vom letzten in Richtung auf den ersten.

7. Quantisierungsverfahren gemäß einem der Ansprüche 1 bis 6, gekennzeichnet dadurch, daß die durchgeführte Abtastung diagonal erfolgt.

8. Quantisierungsverfahren gemäß einem der Ansprüche 1 bis 6, gekennzeichnet dadurch, daß die durchgeführte Abtastung horizontal erfolgt.

9. Quantisierungsverfahren gemäß einem der Ansprüche 1 bis 6, gekennzeichnet dadurch, daß die durchgeführte Abtastung vertikal erfolgt.

10. Quantisierungsverfahren gemäß einem der Ansprüche 1 bis 6, gekennzeichnet dadurch, daß die Blöcke nach einer Peano-Abtastung mit Schwellenwerten versehen und codiert werden.

11. Quantisierungsverfahren gemäß einem der Ansprüche 1 bis 10, gekennzeichnet dadurch, daß der für einen Block gewählte Quantisierungsschritt von einem Bild zum anderen, von einer Blockgruppe zur anderen, von einem Block zum anderen modifizierbar ist.

# FIG.1

DEBUT

I → G, T:=G
Tmax, imax

II → i=1

III → $-T<C_i<T$

OUI

NON

V → $T<T_{max}$

OUI

NON

VI → T:=T+a

IV → T:=G

VII b → Ki:=0

VII a → Ki:=Ci

X → i:=i+1

XI → $i \leqslant i_{max}$

OUI

NON

XII → FIN

FIG. 2

EP 0 360 670 B1